# EUROPEAN PATENT SPECIFICATION

(11) **EP 3 203 602 B1**
(45) Date of publication and mention of the grant of the patent: **19.06.2019**
(21) Application number: 14903423.3
(22) Date of filing: 30.09.2014
(51) Int. Cl.: H02J 50/00

(54) **NON-CONTACT POWER FEEDING DEVICE**
KONTAKTLOSE STROMZUFÜHRUNGSVORRICHTUNG
DISPOSITIF D'ALIMENTATION EN ÉNERGIE ÉLECTRIQUE SANS CONTACT

(43) Date of publication of application: 09.08.2017
(73) Proprietor: FUJI Corporation, Chiryu Aichi (JP)
(72) Inventor: OKI, Masayuki, Chiryu Aichi (JP); NOMURA, Takeshi, Chiryu Aichi (JP)
(74) Representative: Grünecker Patent- und Rechtsanwälte PartG mbB
(86) International application number: PCT/JP2014/076000
(87) International publication number: WO 2016/051484

(56) References cited:
- EP-A2- 0 788 212
- EP-A2- 2 043 226
- WO-A1-2013/002488
- JP-A- 2011 223 860
- JP-A- 2012 005 238
- JP-U- H0 666 201
- US-A1- 2009 001 941

## Description

### Technical Field

The present invention relates to a non-contact power supply device supplying AC power in a non-contact manner with a power supply element and a power receiving element facing each other and, more particularly, to a non-contact power supply device that has a function to determine a relative positional relationship between a power supply element and a power receiving element.

### Background Art

Non-contact power supply devices are used for non-contact power supply to moving bodies, non-contact charging of portable electrical devices, and so on. Electromagnetic induction-type non-contact power supply devices in which coils are used for a power supply element and a power receiving element have been in wide use. Nowadays, capacitive coupling-type non-contact power supply devices in which electrodes that are separated from and face each other constitute capacitors are also in use while magnetic field resonance-type and other types of non-contact power supply devices are being examined as well. Non-contact power supply devices in general supply AC power that has a frequency higher than a commercial frequency. Also becoming widespread are techniques for enhancing non-contact power supply efficiency by the use of a resonance phenomenon. One technical example of this type of non-contact power supply devices is disclosed in PTL 1.

The transmission system that is disclosed in PTL 1, which is based on wireless power transmission, is provided with a transmission power source supplying single frequency electric power, a transmission and reception section made up of a transmission antenna (power supply element) and a reception antenna (power receiving element), a reception power source receiving the electric power received by the reception antenna, and an adjustment section adjusting a resonance coupling impedance of the transmission and reception section based on a waveform of a voltage or/and current of the transmission antenna. With this transmission system, power transmission can be performed at a high level of efficiency with respect to load fluctuations despite the single frequency and design in compliance with radio law regulations is facilitated. As a result, an increase in electric power and a simplified electromagnetic shield structure become available and low-cost products can be realized.

In the transmission system that is disclosed in PTL 1, however, it cannot be detected whether or not the transmission antenna and the reception antenna face each other. As a result, the transmission power source does not stop even when the transmission antenna and the reception antenna are at a significant distance from each other and have a positional relationship in which non-contact power supply cannot be performed. This results in unnecessary losses and a decline in power supply efficiency. Technical examples of power supply efficiency-improved non-contact power supply devices are disclosed in PTL 2 and PTL 3 as countermeasures against those results.

The non-contact power supply device that is disclosed in PTL 2, which uses magnetic coupling between a power transmission coil and a power receiving coil, is provided with means for detecting a positional deviation between the power transmission coil and the power receiving coil and control means for starting a vehicle battery charging operation in a case where the positional deviation is within an allowable value. In the non-contact power supply device that is disclosed in PTL 2, the allowable value is changed in accordance with vehicle battery states and user-set content. The positional deviation detection means that is disclosed in an embodiment of the non-contact power supply device disclosed in PTL 2 is made up of an electromagnetic wave transmission antenna and a reception section detecting a magnetic field of electromagnetic waves. According to it, the charging operation based on non-contact power supply can be started when a state is detected where the power receiving coil provided in a vehicle faces the power transmission coil.

A non-contact power supply device that is used in combination with a board work device has been disclosed in PTL 3 by the present applicant. According to Claim 1 of PTL 3, a head driving mechanism includes multiple non-contact power supply elements arranged along track limiting means, multiple selection switches independently switching between energization and non-energization of the respective non-contact power supply elements, a movable section movably mounted on the track limiting means, a non-contact power receiving element disposed in the movable section, and a power supply control section controlling the multiple selection switches based on a position of the movable section on the track limiting means. In addition, a position detection section detecting the position of the movable section is disclosed in Claim 2 and a position detection section made up of a linear scale and an encoder secion is exemplified in an embodiment. According to it, a high level of power supply efficiency can be ensured by non-contact power supply being performed with some of the multiple non-contact power supply elements energized and the others deenergized.

Prior art document PTL 4 discloses the preamble of claim 1 and PTL 5 discloses a further non-contact power supply device according to the prior art.

### Citation List

### Patent Literature

PTL 1: JP-A-2014-103778
PTL 2: JP-A-2014-110681
PTL 3: JP-A-2013-45777
PTL 4: EP 2043226 A2
PTL 5: US 2009001941 A1

### Summary of Invention

### Technical Problem

When the power supply element and the power receiving element that are exemplified in PTL 1 are at a significant distance from each other, the transmission power source does not stop and a decline in power supply efficiency follows. As a countermeasure against this problem, a sensor detecting the relative positional relationship between the power supply element and the power receiving element is used in PTL 2 and PTL 3. Addition of the sensor requires an attachment space though, and this requirement leads to an increase in the sizes of power supply side and power receiving side devices. Besides, a sensor power supply and a signal processing section are required in addition to the sensor itself, which results in an increase in device cost.

The present invention has been made in view of the problems of the background art described above, and an object thereof is to provide a non-contact power supply device that ensures a high level of power supply efficiency without using a dedicated sensor by determining a relative positional relationship between a power supply element and a power receiving element and entails no increase in cost and no increase in size of power supply section side and power receiving section side device configurations.

### Solution to Problem

The invention of a non-contact power supply device according to Claim 1 for solving the problems described above includes a non-contact power supply circuit supplying AC power in a non-contact manner with the circuit being configured by a power supply element disposed in a power supply section and a power receiving element disposed in a power receiving section capable of being relatively displaced with respect to the power supply section facing each other, a phase difference detecting section detecting a phase difference between a voltage phase of an AC voltage applied to the non-contact power supply circuit in the power supply section and a current phase of an AC current flowing through the power supply element, the phase difference changing depending on a relative positional relationship between the power supply element and the power receiving element, and a determination section determining the relative positional relationship between the power supply element and the power receiving element based on the phase difference.

### Advantageous Effects of Invention

The phase difference between the voltage phase and the current phase of the non-contact power supply circuit changes depending on the relative positional relationship between the power supply element and the power receiving element. The phase difference detecting section detects the phase difference and the determination section determines the relative positional relationship between the power supply element and the power receiving element based on the phase difference. Accordingly, the relative positional relationship between the power supply element and the power receiving element can be determined without a dedicated sensor and neither an increase in cost nor an increase in size of power supply section side and power receiving section side device configurations follows. In addition, a high level of power supply efficiency can be ensured by power supply conditions being variably adjusted based on the determined relative positional relationship.

### Brief Description of Drawings

Fig. 1 is a block diagram illustrating a configuration of a non-contact power supply device according to a first embodiment of the present invention, in which a circuit configuration is illustrated in part.
Fig. 2 is a circuit diagram exemplifying configurations of an orthogonal transform circuit and a current phase detecting section.
Fig. 3 is a circuit diagram illustrating a non-contact power supply circuit at a time when a power supply coil and a power receiving coil face each other.
Fig. 4 is a waveform diagram qualitatively illustrating a state where a voltage phase of an AC voltage and a current phase of an AC current have a phase difference of zero in a power supply section.
Fig. 5 is a waveform diagram qualitatively illustrating a state where the current phase of the AC current lags behind the voltage phase of the AC voltage.
Fig. 6 is a waveform diagram qualitatively illustrating a state where the current phase of the AC current leads the voltage phase of the AC voltage.
Fig. 7 is a diagram showing an operation in which a determination section controls the AC voltage based on the phase difference.
Fig. 8 is a block diagram illustrating a configuration of a non-contact power supply device according to a second embodiment, in which a circuit configuration is illustrated in part.

### Description of Embodiments

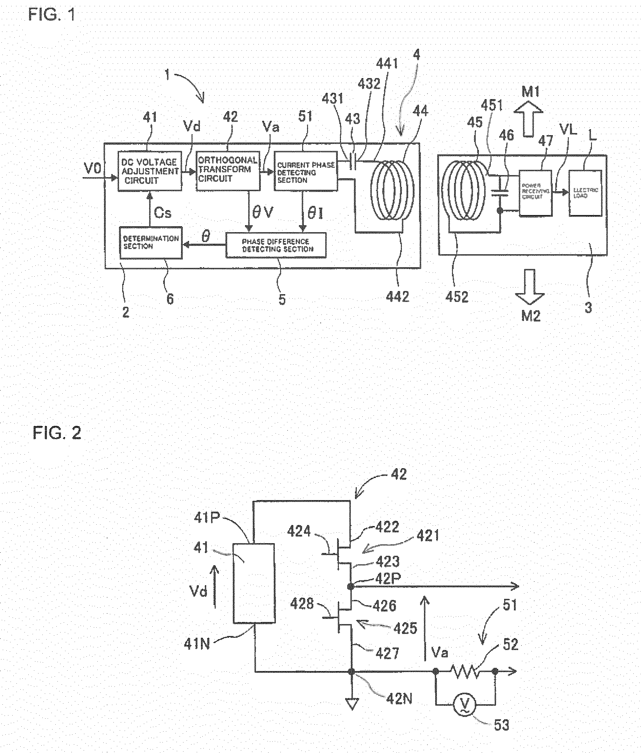

A non-contact power supply device 1 according to a first embodiment of the present invention will be described with reference to Figs. 1 to 7. Fig. 1 is a block diagram illustrating a configuration of the non-contact power supply device 1 according to the first embodiment of the present invention, in which a circuit configuration is illustrated in part. The non-contact power supply device 1 supplies AC power in a non-contact manner from a power supply section 2 to a power receiving section 3. As illustrated by outlined arrows M1 and M2 in Fig. 1, the power receiving section 3 is capable of being relatively displaced with respect to the power supply section 2. A non-contact power supply circuit 4 that is disposed across the power supply section 2 and the power receiving section 3, a phase difference detecting section 5 and a determination section 6 that are disposed in the power supply section 2, and so on constitute the non-contact power supply device 1.

A DC voltage adjustment circuit 41, an orthogonal transform circuit 42, a power supply capacitor 43, and a power supply coil 44 that are disposed in the power supply section 2 and a power receiving coil 45, a power receiving capacitor 46, and a power receiving circuit 47 that are disposed in the power receiving section 3 constitute the non-contact power supply circuit 4. The non-contact power supply circuit 4 uses a DC voltage V0 supplied from the outside to the power supply section 2 as its power source and supplies a direct current voltage VL to an electric load L of the power receiving section 3 when the power supply coil 44 and the power receiving coil 45 face each other.

The DC voltage adjustment circuit 41 adjusts the magnitude of the DC voltage V0 that is supplied in accordance with a control signal Cs from the determination section 6, turns it into a DC voltage Vd, and outputs the DC voltage Vd to the orthogonal transform circuit 42. A switching regulator can be an example of the DC voltage adjustment circuit 41 but the DC voltage adjustment circuit 41 is not limited to the switching regulator.

The orthogonal transform circuit 42 converts the DC voltage Vd into an AC voltage Va that has a frequency f and outputs the AC voltage Va. Fig. 2 is a circuit diagram exemplifying configurations of the orthogonal transform circuit 42 and a current phase detecting section 51. As illustrated in this drawing, series connection between a positive side switching element 421 and a negative side switching element 425 constitutes the orthogonal transform circuit 42. A high-voltage terminal 422 of the positive side switching element 421 is connected to a positive side terminal 41P of the DC voltage adjustment circuit 41 and a low-voltage terminal 423 of the positive side switching element 421 is connected to an output positive side terminal 42P. A high-voltage terminal 426 of the negative side switching element 425 is connected to the output positive side terminal 42P and a low-voltage terminal 427 of the negative side switching element 425 is connected to a negative side terminal 41N of the DC voltage adjustment circuit 41 via an output negative side terminal 42N. The output positive side terminal 42P is connected to one end 431 of the power supply capacitor 43. The output negative side terminal 42N, which is grounded, is connected to the other end 442 of the power supply coil 44 via the current phase detecting section 51.

Control signals that have the frequency f in common and have the form of a rectangular wave with their phases reversed with respect to each other are input to a control terminal 424 of the positive side switching element 421 and a control terminal 428 of the negative side switching element 425, respectively. As a result, the positive side switching element 421 and the negative side switching element 425 exclusively repeat conduction and blocking states. Accordingly, the AC voltage Va that has the frequency f is generated at the output positive side terminal 42P. A high frequency of tens to hundreds of kHz order can be adopted as the frequency f but the frequency f is not limited thereto. The DC voltage adjustment circuit 41 and the orthogonal transform circuit 42 constitute an AC power supply circuit according to the present embodiment adjusting the magnitude of the AC voltage Va in accordance with control from the determination section 6 and outputting the magnitude-adjusted AC voltage Va. The AC power supply circuit is not limited in configuration to the embodiment and, for example, may have a configuration transforming a commercial frequency voltage supplied from the outside.

The power supply capacitor 43 is an embodiment of a resonance element that constitutes a resonance circuit. The other end 432 of the power supply capacitor 43 is connected to one end 441 of the power supply coil 44. When viewed from the orthogonal transform circuit 42, the power supply capacitor 43 is series-connected to the power supply coil 44. Accordingly, the power supply capacitor 43 and the power supply coil 44 constitute a series resonance circuit.

The power supply coil 44 is formed by a conductor being wound a predetermined number of times around a power supply core (not illustrated) . The power supply core is a C-type core that has opposing surfaces at both ends with a coil formed in an intermediate portion, an E-type core that has opposing surfaces at three locations with a coil formed at a center core, or the like. Examples of materials constituting the power supply core can include a body of stacked electromagnetic steel sheets that have a high level of magnetic permeability and ferrite and the examples may also include low-magnetic permeability aluminum. The power supply coil 44 may be an air core coil that has no power supply core as well. A copper wire or the like is used for the conductor. The power supply coil 44 is disposed on a front face of the power supply section 2, which faces the power receiving section 3.

The power receiving coil 45 is formed by a conductor being wound a predetermined number of times around a power receiving core (not illustrated) . The power receiving core and the power supply core may have the same shape or different shapes. An opposing surface of the power receiving core is disposed to face an opposing surface of the power supply core. The power receiving coil 45 may be an air core coil that has no power receiving core as well. The conductor of the power receiving coil 45 may be the same as or differ from the power supply coil 44 in terms of material, sectional area, and the number of windings. One end 451 and the other end 452 of the power receiving coil 45 are connected to the power receiving capacitor 46 and the power receiving circuit 47. The power receiving coil 45 is disposed on a front face of the power receiving section 3, which faces the power supply section 2. Once the power supply coil 44 and the power receiving coil 45 are disposed to face each other, a magnetic circuit is formed by the opposing surfaces of the power supply core and the power receiving core coming into contact with or approaching each other, and then non-contact power supply based on electromagnetic coupling becomes available.

The power receiving capacitor 46 is an embodiment of a resonance element that constitutes a resonance circuit. In view of connection of the electric load L to the power receiving circuit 47, the power receiving capacitor 46 is in parallel connection to the electric load L when viewed from the power receiving coil 45.

The power receiving circuit 47 converts AC power received by the power receiving coil 45 into the DC voltage VL and supplies the DC voltage VL to the electric load L. A full-wave rectifier circuit in which four diodes are bridge-connected can be an example of the power receiving circuit 47 and a smoothing circuit may also be disposed as appropriate. In addition, the power receiving circuit 47 may include a DC stabilization circuit so that the DC voltage VL is stabilized. The electric load L is a DC load and the magnitude of the load can fluctuate. The present invention is not limited thereto though, and the electric load L may be an AC load as well and the circuit configuration of the power receiving circuit 47 is not limited to what has been described above.

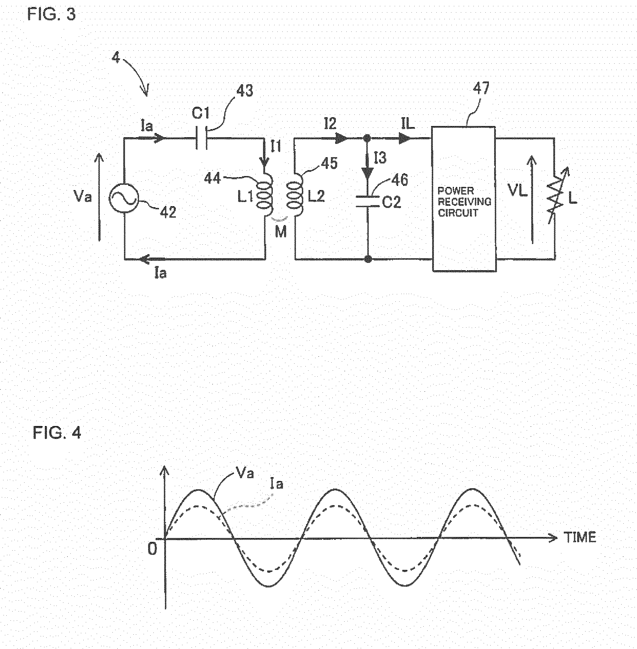

The phase difference detecting section 5 disposed in the power supply section 2 detects a phase difference θ between a voltage phase θV of the AC voltage Va and a current phase θI of an AC current Ia (illustrated in Fig. 3) flowing through the power supply coil 44. The phase difference detecting section 5 detects the voltage phase θV by acquiring the control signals of the two control terminals 424 and 428 from the orthogonal transform circuit 42.

In addition, the phase difference detecting section 5 includes the current phase detecting section 51 exemplified in Fig. 2. A shunt resistor 52, a voltage measurement section 53, and so on constitute the current phase detecting section 51. The shunt resistor 52 is connected between the output negative side terminal 42N of the orthogonal transform circuit 42 and the other end 442 of the power supply coil 44. An element that has a low resistance value and is suitable for current measurement applications is used as the shunt resistor 52. The voltage measurement section 53 measures voltage waveforms occurring at both ends of the shunt resistor 52, that is, a waveform of the AC current Ia. In addition, the voltage measurement section 53 detects the current phase θI from the waveform of the AC current Ia and feeds the current phase θI to the phase difference detecting section 5. The shunt resistor 52 may be connected between the output positive side terminal 42P of the orthogonal transform circuit 42 and the end 431 of the power supply capacitor 43.

When the current phase θI leads the voltage phase θV, the phase difference detecting section 5 represents the phase difference θ in the form of a positive value. When the current phase θI lags behind the voltage phase θV, in contrast, the phase difference detecting section 5 represents the phase difference θ in the form of a negative value. The phase difference detecting section 5 feeds the detected phase difference θ to the determination section 6. The phase difference detecting section 5 and the voltage measurement section 53 can be configured based on, for example, the application of digital and analog electronic measurement circuits.

The determination section 6 disposed in the power supply section 2 determines a relative positional relationship between the power supply coil 44 and the power receiving coil 45 based on a change in an approximate range of the negative value of the phase difference θ. In addition, the determination section 6 estimates the fluctuation of the electric load L based on a change in an approximate range of the positive value of the phase difference θ. Furthermore, the determination section 6 feeds the control signal Cs to the DC voltage adjustment circuit 41 and variably controls the magnitude of the DC voltage Vd based on a determination result and an estimation result. As a result, the magnitude of the AC voltage Va is variably controlled. An electronic control device that has a CPU and is operated based on software or the like can constitute the determination section 6. Functions and operations of the determination section 6 will be described in detail later.

In the first embodiment, characteristic values of the power supply coil 44, the power receiving coil 45, the power supply capacitor 43, and the power receiving capacitor 46 and the frequency f of the AC voltage Va are set as follows. Firstly, it is assumed that the power supply coil 44 and the power receiving coil 45 face each other with the power supply section 2 and the power receiving section 3 directly facing each other and the electric load L increased to its maximum. An inductance value L1 of the power supply coil 44, an inductance value L2 of the power receiving coil 45, a mutual inductance value M between the power supply coil 44 and the power receiving coil 45, a capacitance value C1 of the power supply capacitor 43, a capacitance value C2 of the power receiving capacitor 46, and the frequency f of the AC voltage Va are set such that the phase difference θ becomes zero at this time.

Fig. 3 is a circuit diagram illustrating the non-contact power supply circuit 4 at the time when the power supply coil 44 and the power receiving coil 45 face each other. Although the electric load L is illustrated in the form of a variable resistor in Fig. 3, the present invention is not limited thereto and the electric load L may be a load including a capacitance component or an induction component as well. When the electric load L is at its maximum, the voltage phase θV of the AC voltage Va and the current phase θI of the AC current Ia are in phase as illustrated in Fig. 4. Fig. 4 is a waveform diagram qualitatively illustrating a state where the phase difference θ between the voltage phase θV of the AC voltage Va and the current phase θI of the AC current Ia is zero in the power supply section 2. The AC voltage Va is illustrated by solid lines and the AC current Ia is illustrated by dashed lines in Fig. 4 and Figs. 5 and 6 below.

As illustrated in Fig. 3, the AC current Ia can be regarded as being divided into an excitation current I1 determined by the inductance value L1 of the power supply coil 44 and a received current I2 flowing through the power receiving coil 45 via the mutual inductance value M. The excitation current I1 has a lagging component with respect to the voltage phase θV of the AC voltage Va. Accordingly, the received current I2 has a leading component to the point of cancelling the lagging component of the excitation current I1.

The received current I2 can be regarded as being divided into a load current IL flowing through the electric load L via the power receiving circuit 47 and a charging current 13 for charging and discharging of the power receiving capacitor 46. The leading component of the received current I2 is generated mainly by the charging current 13. The load current IL relatively lags in phase behind the charging current I3 and has a current value increasing and decreasing in step with the load fluctuation of the electric load L.

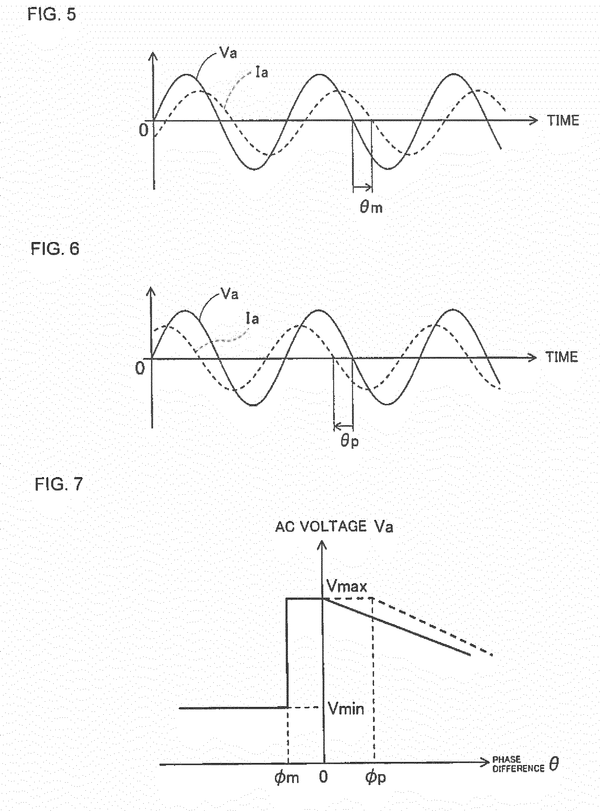

Hereinafter, an operation of the non-contact power supply device 1 according to the first embodiment that has the configuration described above and the functions of the determination section 6 will be described in detail. Assuming a case where the power supply coil 44 and the power receiving coil 45 are gradually separated from each other as a result of a movement from a position where the power receiving section 3 and the power supply section 2 directly face each other, the mutual inductance value M gradually decreases. As a result, the phase difference θ gradually changes to a negative value θm, at which the current phase θI lags, as illustrated in Fig. 5. Fig. 5 is a waveform diagram qualitatively illustrating a state where the current phase θI of the AC current Ia lags behind the voltage phase θV of the AC voltage Va. The lagging of the current phase θI is because the received current I2 decreases when the mutual inductance value M decreases in Fig. 3. As a result, the excitation current I1 on the power supply section 2 side that has the lagging component becomes dominant and the current phase θI of the AC current Ia lags.

The determination section 6 determines whether or not the power supply coil 44 and the power receiving coil 45 face each other by using the operation in which the phase difference θ changes to the negative value θm and controls the AC voltage Va. The determination section 6 holds a lagging phase threshold Φm (illustrated in Fig. 7), which is used for the determination. The lagging phase threshold Φm is the phase difference θ that is generated when the power supply coil 44 and the power receiving coil 45 face each other while including a maximum error in relative position which is allowed within a range in which the non-contact power supply is not hindered. Preferably, the lagging phase threshold Φm is obtained in advance through an experiment, simulation, or the like. The determination section 6 determines that the power supply coil 44 and the power receiving coil 45 face each other when the phase difference θ is equal to or greater than the lagging phase threshold Φm and determines that the power supply coil 44 and the power receiving coil 45 do not face each other when the phase difference θ falls short of the lagging phase threshold Φm.

Next, a case is assumed where the electric load L gradually decreases with the power receiving section 3 directly facing the power supply section 2. The load current IL gradually decreases in this case. As a result, the phase difference θ gradually changes to a positive value θp, at which the current phase θI leads, as illustrated in Fig. 6. Fig. 6 is a waveform diagram qualitatively illustrating a state where the current phase θI of the AC current Ia leads the voltage phase θV of the AC voltage Va. The current phase θI leads because the charging current I3 becomes relatively dominant with the load current IL in the received current I2 decreasing in Fig. 3. As a result, the current phase θI of the AC current Ia on the power supply section 2 side leads in the end.

The determination section 6 estimates the load fluctuation of the electric load L by using the operation in which the phase difference θ changes to the positive value θp and controls the AC voltage Va. The determination section 6 holds zero or a leading phase threshold Φp (illustrated in Fig. 7), which is a predetermined positive value, as a determination threshold used for the estimation. The leading phase threshold Φp or zero is the phase difference θ that is generated when the electric load L is regarded as being at its maximum with an error included. Preferably, whether the determination threshold is to be zero or the leading phase threshold Φp is determined in advance through an experiment, simulation, or the like. The determination section 6 is capable of estimating that the electric load L gradually decreases as the phase difference θ increases above zero or the leading phase threshold Φp.

Hereinafter, an operation in which the determination section 6 controls the AC voltage Va will be described. Fig. 7 is a diagram showing the operation in which the determination section 6 controls the AC voltage Va based on the phase difference θ. The horizontal and vertical axes that are illustrated in Fig. 7 represent the phase difference θ and the AC voltage Va, respectively. As described above, the determination section 6 determines whether or not the power supply coil 44 and the power receiving coil 45 face each other by comparing the phase difference θ to the lagging phase threshold Φm, which is a negative value. Then, the determination section 6 determines that the power supply coil 44 and the power receiving coil 45 do not face each other when the phase difference θ falls short of the lagging phase threshold Φm and performs control such that the AC voltage Va becomes a low detection voltage Vmin.

The detection voltage Vmin is within a range in which the phase difference detecting section 5 is capable of detecting the phase difference θ. In other words, the AC current Ia decreases as the AC voltage Va is lowered, and thus a lower limit value of the AC voltage Va at which the current phase θI can be detected is present. Accordingly, the phase difference detecting section 5 is capable of detecting the phase difference θ with stability by the detection voltage Vmin being set to a level slightly higher than the lower limit value of the AC voltage Va. According to this, the phase difference θ can be detected regardless of how the power receiving section 3 is relatively displaced with respect to the power supply section 2 and it can be determined whether or not the power supply coil 44 and the power receiving coil 45 face each other. In addition, loss generation can be significantly reduced since the AC voltage Va is as low as the detection voltage Vmin. In other words, the non-contact power supply circuit 4 functions as a sensor operated at a low voltage for facing detection while the power supply coil 44 and the power receiving coil 45 do not face each other.

When the phase difference θ is equal to or greater than the lagging phase threshold Φm, the determination section 6 determines that the power supply coil 44 and the power receiving coil 45 face each other and performs control such that the AC voltage Va becomes a high power supply voltage Vmax. The power supply voltage Vmax is maintained until the phase difference θ reaches zero or the leading phase threshold Φp. In this manner, a large power supply amount can be ensured for the non-contact power supply. Once the phase difference θ falls below the lagging phase threshold Φm with the current phase θI lagging, in contrast, the determination section 6 performs control such that the AC voltage Va falls from the power supply voltage Vmax to the detection voltage Vmin.

In addition, the determination section 6 estimates the fluctuation of the electric load L by comparing the phase difference θ to zero or the leading phase threshold Φp. Then, the determination section 6 performs control such that the AC voltage Va is gradually reduced from the power supply voltage Vmax as the phase difference θ increases above zero or the leading phase threshold Φp. The thick solid line and the thick dashed line that are illustrated in Fig. 7 represent a case where control is performed such that the AC voltage Va is gradually reduced from a point in time when the phase difference θ exceeds zero and a case where control is performed such that the AC voltage Va is gradually reduced from the power supply voltage Vmax from a point in time when the phase difference θ exceeds the leading phase threshold Φp, respectively.

The degree of inclination for the control for gradually reducing the AC voltage Va can be determined in advance based on the characteristics of the electric load L and the like. Then, the electric load L decreases as the phase difference θ increases, and thus the power supply amount is neither excessive nor insufficient despite the gradual reduction of the AC voltage Va. As a result, the power supply amount can be maintained at an appropriate level at all times with a change in the phase difference θ detected and the magnitude of the AC voltage Va variably controlled when the load fluctuation has occurred in the electric load L.

The non-contact power supply device 1 according to the first embodiment is provided with the non-contact power supply circuit 4 supplying the AC power in a non-contact manner with the circuit being configured by the power supply element (power supply coil 44) disposed in the power supply section 2 and the power receiving element (power receiving coil 45) disposed in the power receiving section 3 capable of being relatively displaced with respect to the power supply section 2 facing each other, the phase difference detecting section 5 detecting the phase difference θ between the voltage phase θV of the AC voltage Va applied to the non-contact power supply circuit 4 in the power supply section 2 and the current phase θI of the AC current Ia flowing through the power supply element, the phase difference θ changing depending on the relative positional relationship between the power supply element and the power receiving element, and the determination section 6 determining the relative positional relationship between the power supply element and the power receiving element based on the phase difference θ.

According to this, the phase difference θ between the voltage phase θV and the current phase θI of the non-contact power supply circuit 4 changes depending on the relative positional relationship between the power supply element and the power receiving element. The phase difference detecting section 5 detects the phase difference θ and the determination section 6 determines the relative positional relationship between the power supply element and the power receiving element based on the phase difference θ. Accordingly, the relative positional relationship between the power supply element and the power receiving element can be determined without a dedicated sensor and the devices on the power supply section 2 side and the power receiving section 3 side result in no increase in size and cost. In addition, a high level of power supply efficiency can be ensured by power supply conditions being variably adjusted based on the determined relative positional relationship.

In the non-contact power supply device 1 according to the first embodiment, the determination section 6 determines whether or not the power supply element and the power receiving element face each other based on a result of the comparison between the phase difference θ and the predetermined lagging phase threshold Φm, performs control such that the AC voltage Va becomes the high power supply voltage Vmax when it is determined that the power supply element and the power receiving element face each other, and performs control such that the AC voltage Va becomes the low detection voltage Vmin within the range in which the phase difference detecting section 5 is capable of detecting the phase difference θ when it is determined that the power supply element and the power receiving element do not face each other.

According to this, the phase difference θ can be detected regardless of how the power receiving section 3 is relatively displaced with respect to the power supply section 2 and it can be determined whether or not the power supply element and the power receiving element face each other. In addition, a significant loss reduction can be achieved since the AC voltage Va is the detection voltage Vmin and the non-contact power supply circuit 4 functions as the facing detection sensor while the power supply element and the power receiving element do not face each other. During the facing between the power supply element and the power receiving element, the AC voltage Va is the power supply voltage Vmax, and thus the large power supply amount can be ensured for the non-contact power supply.

In the non-contact power supply device 1 according to the first embodiment, the non-contact power supply circuit 4 includes the AC power supply circuits (DC voltage adjustment circuit 41 and orthogonal transform circuit 42) adjusting the magnitude of the AC voltage Va in accordance with the control from the determination section 6 disposed in the power supply section 2 and outputting the magnitude-adjusted AC voltage Va, the power receiving circuit 47 converting the AC power received by the power receiving element disposed in the power receiving section 3 and performing power supply to the electric load L, and the one or more resonance elements included in the non-contact power supply circuit 4 to constitute the resonance circuit and the phase difference detecting section 5 includes the current phase detecting section 51 acquiring the voltage phase θV from the AC power supply circuit (orthogonal transform circuit 42) and detecting the current phase θI.

The power supply element is the power supply coil 44, the power receiving element is the power receiving coil 45, and the resonance elements include the power supply capacitor 43 in series connection to the power supply coil 44 when viewed from the AC power supply circuit and the power receiving capacitor 46 in parallel connection to the electric load L when viewed from the power receiving coil 45.

According to this, a significant improvement in terms of power supply efficiency can be achieved by the non-contact power supply using a resonance phenomenon being performed in the electromagnetic coupling-type non-contact power supply device 1 including the resonance elements (power supply capacitor 43 and power receiving capacitor 46) in the non-contact power supply circuit 4.

In the non-contact power supply device 1 according to the first embodiment, the phase difference θ is represented in the form of a positive value when the current phase θI leads the voltage phase θV, the phase difference θ is represented in the form of a negative value when the current phase θI lags behind the voltage phase θV, the inductance value L1 of the power supply coil 44, the inductance value L2 of the power receiving coil 45, the mutual inductance value M between the power supply coil 44 and the power receiving coil 45, the capacitance value C1 of the power supply capacitor 43, the capacitance value C2 of the power receiving capacitor 46, and the frequency f of the AC voltage Va are set such that the phase difference θ becomes zero when the power supply coil 44 and the power receiving coil 45 face each other, the negative lagging phase threshold Φm at which the current phase θI lags by a predetermined amount behind the voltage phase θV is set, the determination section 6 determines that the power supply coil 44 and the power receiving coil 45 face each other when the phase difference θ is equal to or greater than the lagging phase threshold Φm, and the determination section 6 determines that the power supply coil 44 and the power receiving coil 45 do not face each other when the phase difference θ falls short of the lagging phase threshold Φm.

According to this, the use of the lagging phase threshold Φm results in an accurate determination of whether or not the power supply coil 44 and the power receiving coil 45 face each other. Accordingly, the AC voltage Va can be reliably controlled at a low level when the power supply coil 44 and the power receiving coil 45 do not face each other and the power supply efficiency can be significantly improved.

In the non-contact power supply device 1 according to the first embodiment, the inductance value L1 of the power supply coil 44, the inductance value L2 of the power receiving coil 45, the mutual inductance value M between the power supply coil 44 and the power receiving coil 45, the capacitance value C1 of the power supply capacitor 43, the capacitance value C2 of the power receiving capacitor 46, and the frequency f of the AC voltage Va are set such that the phase difference θ becomes zero when the power supply coil 44 and the power receiving coil 45 face each other and the electric load L is at its maximum and the determination section 6 performs control such that the AC voltage Va gradually decreases as the phase difference θ increases above zero or the leading phase threshold Φp that has a predetermined positive value.

According to this, the magnitude of the AC voltage Va can be variably controlled by a change in the phase difference θ being detected when the load fluctuation has occurred in the electric load L. Accordingly, the power supply amount can be maintained at an appropriate level at all times in response to the load fluctuation with excess of deficiency of it suppressed and the power supply efficiency can be significantly improved.

The determination section 6 may estimate a relative displacement amount of the power receiving section 3 with respect to the power supply section 2 based on the phase difference θ. Qualitatively speaking, the determination section 6 is capable of estimating that the power supply section 2 and the power receiving section 3 more and more directly face each other in their positional relationship as the phase difference θ becomes closer to zero. In addition, the determination section 6 can estimate that the power supply section 2 and the power receiving section 3 are increasingly separated from each other by deviation from the positional relationship in which they directly face each other as the absolute value of the phase difference θ in the negative value increases.

According to this, the positional relationship between the power supply section 2 and the power receiving section 3 can be estimated, and thus utility can be achieved regarding controlling of the position of the power receiving section 3. For example, the position of the power receiving section 3 can be corrected for the power receiving section 3 to directly face the power supply section 2 when it is estimated that the power supply section 2 and the power receiving section 3 deviate from the positional relationship in which they directly face each other, and then the power supply efficiency can be improved.

Although the power supply element is the power supply coil 44 and the power receiving element is the power receiving coil 45 in the first embodiment, the present invention is not limited thereto. For example, the present invention can also be applied to a capacitive coupling-type non-contact power supply device in which each of a power supply element and a power receiving element is made up of a pair of electrodes. In addition, the circuit configuration of the non-contact power supply circuit 4 can be modified in various ways.

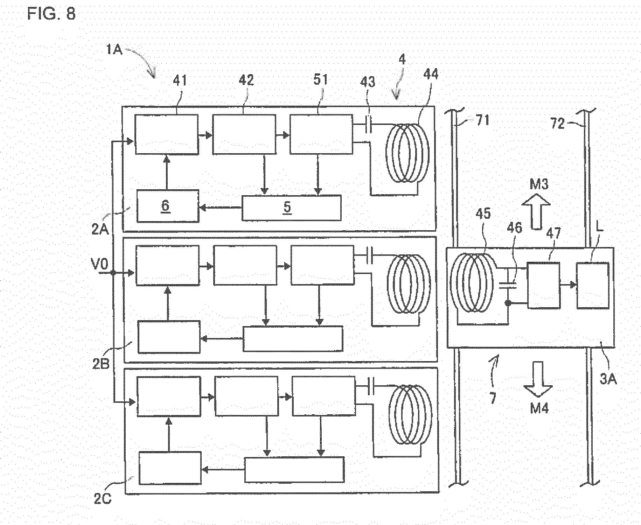

Hereinafter, a non-contact power supply device 1A according to a second embodiment will be described with reference to Fig. 8. Fig. 8 is a block diagram illustrating a configuration of the non-contact power supply device 1A according to the second embodiment, in which a circuit configuration is illustrated in part. In the second embodiment, multiple power supply sections 2A, 2B, and 2C are installed with respect to a single power receiving section 3A.

The power receiving section 3A is installed in a moving body 7. The moving body 7 moves on a pair of tracks 71 and 72 extending in parallel to each other as illustrated by outlined arrows M3 and M4 in Fig. 8. The power receiving section 3A is similar in configuration to the power receiving section 3 according to the first embodiment. The multiple power supply sections 2A, 2B, and 2C are arranged to be slightly separated from one another along the track 71. Each of the power supply sections 2A, 2B, and 2C is similar in configuration to the power supply section 2 according to the first embodiment. The number of the power supply sections 2A, 2B, and 2C is appropriately determined in accordance with the total length of the tracks 71 and 72. The non-contact power supply device 1A supplies in a non-contact manner electric power required for the movement of the moving body 7, control of the movement of the moving body 7, and a work performed on the moving body 7.

The power receiving coil 45 of the power receiving section 3A is disposed across a wide range of a front face of the power receiving section 3A, and the respective power supply coils 44 of the power supply sections 2A, 2B, and 2C are disposed across wide ranges of front faces of the respective power supply sections 2A, 2B, and 2C as well. Accordingly, once the power receiving section 3A directly faces any one of the power supply sections 2A, 2B, and 2C in accordance with a movement position of the moving body 7, the power receiving coil 45 faces any one of the power supply coils 44. Once the power receiving section 3A performs facing between any two of the power supply sections 2A, 2B, and 2C, the power receiving coil 45 performs facing across any two of the power supply coils 44.

The lagging phase threshold Φm is set such that it is determined that the power supply coil 44 and the power receiving coil 45 face each other even when they are disposed to be offset by approximately half. The second embodiment is almost the same in operation as the first embodiment, and thus description thereof will be omitted herein. According to this, the power receiving coil 45 faces the power supply coil 44 disposed in the one or two power supply sections 2A, 2B, and 2C and is capable of receiving AC power at all times.

In the non-contact power supply device 1A according to the second embodiment, the power receiving section 3A is installed in the moving body 7 moving on the tracks 71 and 72, the multiple power supply sections 2A, 2B, and 2C are installed along the track 71, and the power receiving element (power receiving coil 45) disposed in the power receiving section 3A faces the power supply element (power supply coil 44) disposed in the one or more power supply sections 2A, 2B, and 2C and receives the AC power.

According to this, effects similar to those according to the first embodiment are achieved by the non-contact power supply device 1A performing power supply to the moving body 7.

In the second embodiment, the power receiving section 3A may be larger in size than the power supply sections 2A, 2B, and 2C, the power receiving coil 45 may be larger in size than the power supply coil 44, and the power receiving coil 45 may face the multiple power supply coils 44. Various other applications and modifications are also available in the framework of the present invention.

### Industrial Applicability

The non-contact power supply device according to the present invention can be broadly used for non-contact power supply to moving bodies, non-contact charging of portable electrical devices, and so on.

### Reference Signs List

- 1, 1A:: Non-contact power supply device
- 2, 2A, 2B, 2C:: Power supply section
- 3, 3A:: Power receiving section
- 4:: Non-contact power supply circuit
- 41:: DC voltage adjustment circuit
- 42:: Orthogonal transform circuit
- 43:: Power supply capacitor
- 44:: Power supply coil
- 45:: Power receiving coil
- 46:: Power receiving capacitor
- 47:: Power receiving circuit
- 5:: Phase difference detecting section
- 51:: Current phase detecting section
- 6:: Determination section
- 7:: Moving body
- 71, 72:: Track
- L:: Electric load
- θ:: Phase difference
- Va:: AC voltage
- θV:: Voltage phase
- Ia:: AC current
- θI:: current phase
- Φm:: Lagging phase threshold
- Φp:: Leading phase threshold
- Vmax:: Power supply voltage
- Vmin:: Detection voltage

## Claims

1. A non-contact power supply device (1) comprising:
a non-contact power supply circuit (4) supplying AC power in a non-contact manner with the circuit being configured by a power supply element (44) disposed in a power supply section (2) and a power receiving element (45) disposed in a power receiving section (3) capable of being relatively displaced with respect to the power supply section (2) facing each other;
a phase difference detecting section (5) detecting a phase difference (θ) between a voltage phase (θ_{V}) of an AC voltage (Va) applied to the non-contact power supply circuit (4) in the power supply section (2) and a current phase (θ_{I}) of an AC current (Ia) flowing through the power supply element (44), the phase difference (θ) changing depending on a relative positional relationship between the power supply element (44) and the power receiving element (45); and
a determination section (6) determining the relative positional relationship between the power supply element (44) and the power receiving element (45) based on the phase difference (θ)
**characterized in that:**
the determination section (6) determines whether or not the power supply element (44) and the power receiving element (45) face each other based on a result of comparison between the phase difference (θ) and a predetermined phase threshold (Φ),
wherein the determination section (6) performs control such that the AC voltage (Va) is at a high level when it is determined that the power supply element (44) and the power receiving element (45) face each other, and
wherein the determination section (6) performs control such that the AC voltage (Va) is at a low level within a range in which the phase difference (θ) can be detected by the phase difference detecting section (5) when it is determined that the power supply element (44) and the power receiving element (45) do not face each other.

2. The non-contact power supply device (1) according to Claim 1,
wherein the non-contact power supply circuit (4) includes:
an AC power supply circuit disposed in the power supply section (2), adjusting a magnitude of the AC voltage (Va) in accordance with control from the determination section (6), and outputting the magnitude-adjusted AC voltage (Va);
a power receiving circuit (47) disposed in the power receiving section (3), converting the AC power received by the power receiving element (45), and performing power supply to an electric load (L); and
at least one resonance element included in the non-contact power supply circuit (4) and constituting a resonance circuit, and
wherein the phase difference detecting section (5) includes a current phase (θ_{I}) detecting section (51) acquiring the voltage phase (θ_{V}) from the AC power supply circuit and detecting the current phase (θ_{I}).

3. The non-contact power supply device (1) according to Claim 2,
wherein the power supply element (44) is a power supply coil (44), the power receiving element (45) is a power receiving coil (45), and the resonance element includes a power supply capacitor (43) in series connection to the power supply coil (44) when viewed from the AC power supply circuit and a power receiving capacitor (46) in parallel connection to the electric load (L) when viewed from the power receiving coil (45).

4. The non-contact power supply device (1) according to Claim 3,
wherein the phase difference (θ) is represented as a positive value when the current phase (θ_{I}) leads the voltage phase (θ_{V}) and is represented as a negative value when the current phase (θ_{I}) lags behind the voltage phase (θ_{V}),
wherein characteristic values of the power supply coil (44), the power receiving coil (45), the power supply capacitor (43), and the power receiving capacitor (46) and a frequency of the AC voltage (Va) are set such that the phase difference (θ) becomes zero when the power supply coil (44) and the power receiving coil (45) face each other,
wherein a lagging phase threshold (Φₘ) is set, the lagging phase threshold (Φₘ) having a negative value at which the current phase (θ_{I}) lags by a predetermined amount behind the voltage phase (θ_{V}), and
wherein the determination section (6) determines that the power supply coil (44) and the power receiving coil (45) face each other when the phase difference (θ) is equal to or greater than the lagging phase threshold (Φₘ) and determines that the power supply coil (44) and the power receiving coil (45) do not face each other when the phase difference (θ) falls short of the lagging phase threshold (Φₘ).

5. The non-contact power supply device (1) according to Claim 4,
wherein the characteristic values of the power supply coil (44), the power receiving coil (45), the power supply capacitor (43), and the power receiving capacitor (46) and the frequency of the AC voltage (Va) are set such that the phase difference (θ) becomes zero when the power supply coil (44) and the power receiving coil (45) face each other and the electric load (L) is at its maximum, and
wherein the determination section (6) performs control such that the AC voltage (Va) gradually decreases as the phase difference (θ) increases above zero or a leading phase threshold (Φₚ) having a predetermined positive value.

6. The non-contact power supply device (1) according to any one of Claims 1 to 5,
wherein the determination section (6) estimates a relative displacement amount of the power receiving section (3) with respect to the power supply section (2) based on the phase difference (θ).

7. The non-contact power supply device (1) according to any one of Claims 1 to 6,
wherein the power receiving section (3) is installed in a moving body (7) moving on a track (71, 72) and the multiple power supply sections (2) are installed along the track (71, 72), and
wherein the power receiving element (45) disposed in the power receiving section (3) faces the power supply element (44) disposed in the one or more power supply sections (2) and receives the AC power.

## Patentansprüche

1. Eine kontaktlose Stromversorgungsvorrichtung (1) umfassend:
eine kontaktlose Stromversorgungsschaltung (4), die Wechselstrom auf kontaktlose Weise bereitstellt, wobei die Schaltung durch ein Stromversorgungselement (44) konfiguriert ist, das in einem Stromversorgungsabschnitt (2) angeordnet ist, und ein Stromempfangselement (45) angeordnet in einem Stromempfangsabschnitt (3), welches relativ zu dem Stromversorgungsabschnitt (2), verschoben werden kann, die einander zugewandt sind;
ein Phasendifferenzerfassungsabschnitt (5), der eine Phasendifferenz (θ) zwischen einer Spannungsphase (θ_{V}) einer Wechselspannung (Va), welche an die kontaktlose Stromversorgungsschaltung (4) in dem Stromversorgungsabschnitt (2) angelegt wird und einer Stromphase (θ_{I}) eines durch das Stromversorgungselement (44) fließenden Wechselstroms (la) erfasst, wobei sich die Phasendifferenz (θ) in Abhängigkeit von einer relativen Positionsbeziehung zwischen dem Stromversorgungselement (44) und dem Stromempfangselement (45) ändert; und
ein Bestimmungsabschnitt (6), der die relative Positionsbeziehung zwischen dem Stromversorgungselement (44) und dem Stromempfangselement (45) auf der Grundlage der Phasendifferenz (θ) bestimmt
**dadurch gekennzeichnet dass:**
der Bestimmungsabschnitt (6) auf der Grundlage eines Vergleichsergebnisses zwischen der Phasendifferenz (θ) und einer vorbestimmten Phasenschwelle (Φ) bestimmt, ob sich das Stromversorgungselement (44) und das Stromempfangselement (45) gegenüberliegen oder nicht,
wobei der Bestimmungsabschnitt (6) eine Steuerung derart durchführt, dass sich die Wechselspannung (Va) auf einem hohen Pegel befindet, wenn bestimmt wird, dass das Stromversorgungselement (44) und das Stromempfangselement (45) einander zugewandt sind, und
wobei der Bestimmungsabschnitt (6) eine Steuerung derart durchführt, dass die Wechselspannung (Va) auf einem niedrigen Pegel innerhalb eines Bereichs liegt, in dem die Phasendifferenz (θ) von dem Phasendifferenzerfassungsabschnitt (5) erfasst werden kann, wenn bestimmt wird, dass das Stromversorgungselement (44) und das Stromempfangselement (45) einander nicht zugewandt sind.

2. Die kontaktlose Stromversorgungsvorrichtung (1) gemäß Anspruch 1,
wobei der kontaktlose Stromversorgungsschaltung (4) umfasst:
eine Wechselstromversorgungsschaltung, die in dem Stromversorgungsabschnitt (2) angeordnet ist, um eine Größe der Wechselspannung (Va) gemäß einer Steuerung von dem Bestimmungsabschnitt (6) einzustellen und die in der Größe eingestellte Wechselspannung (Va) auszugeben;
eine Stromempfangsschaltung (47), die in dem Stromempfangsabschnitt (3) angeordnet ist, die von dem Stromempfangselement (45) empfangene Wechselspannung umwandelt und eine Stromversorgung für eine elektrische Last (L) durchführt; und
zumindest ein Resonanzelement, das in der kontaktlosen Stromversorgungsschaltung (4) enthalten ist und eine Resonanzschaltung bildet, und
wobei der Phasendifferenzerfassungsabschnitt (5) einen Stromphasenerfassungsabschnitt (51) enthält, welcher die Spannungsphase (θv) von der Wechselstromversorgungsschaltung erfasst und die Stromphase (θ_{I}) erfasst.

3. Die kontaktlose Stromversorgungsvorrichtung (1) gemäß Anspruch 2,
wobei das Stromversorgungselement (44) eine Stromversorgungsspule (44) ist, das Stromempfangselement (45) eine Stromempfangsspule (45) ist und das Resonanzelement bei Betrachtung von der Wechselstromversorgungsschaltung einen Stromversorgungskondensator (43) in Reihenverbindung zu der Stromversorgungsspule (44) und bei Betrachtung von der Stromempfangsspule (45) einem Stromaufnahmekondensator (46) in Parallelverbindung mit der elektrischen Last (L) enthält.

4. Die kontaktlose Stromversorgungsvorrichtung (1) gemäß Anspruch 3,
wobei die Phasendifferenz (θ) als positiver Wert dargestellt wird, wenn die Stromphase (θ) der Spannungsphase (θv) vorausgeht, und als negativer Wert dargestellt wird, wenn die Stromphase der Spannungsphase (θv) nacheilt,
wobei charakteristische Werte der Stromversorgungsspule (44), der Stromempfangsspule (45), des Stromversorgungskondensators (43) und des Stromempfangskondensators (46) und eine Frequenz der Wechselspannung (Va) derart eingestellt werden, dass die Phasendifferenz (θ) wird Null, wenn die Stromversorgungsspule (44) und die Stromempfangsspule (45) einander zugewandt sind,
wobei eine Verzögerungsphasenschwelle (Φm) eingestellt wird, wobei die Verzögerungsphasenschwelle (Φm) einen negativen Wert aufweist, bei dem die Stromphase (θ_{I}) um einen vorbestimmten Betrag hinter der Spannungsphase (θV) verzögert ist, und
wobei der Bestimmungsabschnitt (6) bestimmt, dass die Stromversorgungsspule (44) und die Stromempfangsspule (45) einander zugewandt sind, wenn die Phasendifferenz (θ) gleich oder größer als der Verzögerungsphasenschwelle (Φm) ist, und bestimmt dass die Stromversorgungsspule (44) und die Stromempfangsspule (45) einander nicht zugewandt sind, wenn die Phasendifferenz (θ) den Verzögerungsphasenschwelle (Φm) unterschreitet.

5. Die kontaktlose Stromversorgungsvorrichtung (1) gemäß Anspruch 4,
wobei die charakteristischen Werte der Stromversorgungsspule (44), der Stromempfangsspule (45), des Stromversorgungskondensators (43) und des Stromempfangskondensators (46) und der Frequenz der Wechselspannung (Va) eingestellt werden, so dass die Phasendifferenz (θ) Null wird, wenn die Stromversorgungsspule (44) und die Stromempfangsspule (45) einander zugewandt sind und die elektrische Last (L) maximal ist, und
wobei der Bestimmungsabschnitt (6) eine Steuerung derart durchführt, dass die Wechselspannung (Va) allmählich abnimmt, wenn die Phasendifferenz (θ) über Null oder eine voreilende Phasenschwelle (Φₚ) mit einem vorbestimmten positiven Wert steigt.

6. Die kontaktlose Stromversorgungsvorrichtung (1) gemäß einem der Ansprüche 1 bis 5,
wobei der Bestimmungsabschnitt (6) einen relativen Verschiebungsbetrag des Stromempfangsabschnitts (3) in Bezug auf den Stromversorgungsabschnitt (2) basierend auf der Phasendifferenz (θ) schätzt.

7. Die kontaktlose Stromversorgungsvorrichtung (1) gemäß einem der Ansprüche 1 bis 6,
wobei der Stromaufnahmeabschnitt (3) in einem sich bewegenden Körper (7) installiert ist, der sich auf einer Schiene (71, 72) bewegt, und die mehreren Stromversorgungsabschnitte (2) entlang der Schiene (71, 72) installiert sind
wobei das Stromempfangselement (45), das in dem Energieempfangsabschnitt (3) angeordnet ist, dem Stromversorgungselement (44) zugewandt ist, welches in dem einen oder den mehreren Stromversorgungsabschnitten (2) angeordnet ist, und den Wechselstrom empfängt.

## Revendications

1. Dispositif d'alimentation en énergie électrique sans contact (1) comprenant:
un circuit d'alimentation en énergie électrique sans contact (4) fournissant du courant alternatif sans contact, le circuit étant configuré par un élément d'alimentation en énergie électrique (44) disposé dans une section d'alimentation en énergie électrique (2) et un élément récepteur de courant (45) disposé dans une section de réception d'énergie électrique (3) pouvant être relativement décalée par rapport à la section d'alimentation en énergie électrique (2) se faisant face;
une section de détection de différence de phase (5) détectant une différence de phase (9) entre une phase de tension (0v) d'une tension alternative (Va) appliquée au circuit d'alimentation en énergie électrique sans contact (4) dans la section d'alimentation en énergie électrique (2) et une phase de courant (6i) d'un courant alternatif (la) traversant l'élément d'alimentation en énergie électrique (44), la différence de phase (9) variant en fonction d'une relation de position relative entre l'élément d'alimentation en énergie électrique (44) et l'élément de réception d'énergie électrique (45); et
une section de détermination (6) pour déterminant la relation de position relative entre l'élément d'alimentation en énergie électrique (44) et l'élément de réception d'énergie électrique (45) sur la base de la différence de phase (6)
**caractérisé en ce que:**
la section de détermination (6) détermine si l'élément d'alimentation en énergie électrique (44) et l'élément de réception d'alimentation en énergie électrique (45) se font face ou non en fonction d'un résultat de comparaison entre la différence de phase (9) et un seuil de phase prédéterminé (O),
dans lequel la section de détermination (6) exécute une commande telle que la tension alternative (Va) est à un niveau élevé lorsque l'on détermine que l'élément d'alimentation en énergie électrique (44) et l'élément de réception d'énergie électrique (45) se font face, et
dans lequel la section de détermination (6) exécute une commande telle que la tension alternative (Va) est à un niveau bas dans une plage dans laquelle la différence de phase (9) peut être détectée par la section de détection de différence de phase (5) lorsque l'on détermine que l'élément d'alimentation en énergie électrique (44) et l'élément de réception d'énergie électrique (45) ne se font pas face.

2. Dispositif d'alimentation en énergie électrique sans contact selon la revendication 1, dans lequel le circuit d'alimentation en énergie électrique sans contact (4) comprend:
un circuit d'alimentation en courant alternatif disposé dans la section d'alimentation en énergie électrique (2), réglant l'amplitude de la tension alternative (Va) conformément à la commande de la section de détermination (6) et délivrant la tension alternative réglée en amplitude (Va);
un circuit de réception d'énergie électrique (47) disposé dans la section de réception d'énergie électrique (3), convertissant l'énergie électrique en courant alternatif reçue par l'élément de réception d'énergie électrique (45) et assurant l'alimentation en énergie électrique pour une charge électrique (L); et
au moins un élément de résonance inclus dans le circuit d'alimentation en énergie électrique sans contact (4) et constituant un circuit de résonance, et
dans lequel la section de détection de différence de phase (5) comprend une section de détection de phase de courant (6i) (51) permettant d'acquérir la phase de tension (0v) à partir du circuit d'alimentation en courant alternatif et de détecter la phase de courant (8i).

3. Dispositif d'alimentation en énergie électrique sans contact selon la revendication 2,
dans lequel l'élément d'alimentation en énergie électrique (44) est une bobine d'alimentation en énergie électrique (44), l'élément de réception d'énergie électrique (45) est une bobine de réception d'énergie électrique (45) et l'élément de résonance comprend un condensateur d'alimentation en énergie électrique (43) en série avec la bobine d'alimentation en énergie électrique (44), vu depuis le circuit d'alimentation en courant alternatif et un condensateur de réception d'énergie électrique (46) en parallèle avec la charge électrique (L), vu depuis la bobine de réception d'alimentation en énergie électrique (45).

4. Dispositif d'alimentation en énergie électrique sans contact (1) selon la revendication 3,
dans lequel la différence de phase (6) est représentée comme une valeur positive lorsque la phase de courant (Gi) est en avance sur la phase de tension (6v) et est représentée par une valeur négative lorsque la phase de courant (9i) est en retard par rapport à la phase de tension (0v),
dans lequel les valeurs caractéristiques de la bobine d'alimentation en énergie électrique (44), de la bobine de réception d'alimentation en énergie électrique (45), du condensateur d'alimentation en énergie électrique (43) et du condensateur de réception d'alimentation en énergie électrique (46) et une fréquence de la tension alternative (Va) sont réglées de telle sorte que la différence de phase (9) devient nulle lorsque la bobine d' alimentation en énergie électrique (44) et la bobine de réception d'énergie électrique (45) se font face,
dans lequel un seuil de phase de retard (Φₘ) est établi, le seuil de phase de retard (Oₘ) prenant une valeur négative à laquelle la phase de courant (0i) est en retard d'une quantité prédéterminée par rapport à la phase de tension (8v), et
dans lequel la section de détermination (6) détermine que la bobine d'alimentation en énergie électrique (44) et la bobine de réception d'énergie électrique (45) se font face lorsque la différence de phase (9) est égale ou supérieure au seuil de phase de retard (Φₘ) et détermine que la bobine d'alimentation en énergie électrique (44) et la bobine de réception d'énergie électrique (45) ne se font pas face lorsque la différence de phase (0) est inférieure au seuil de phase de retard (Φₘ).

5. Dispositif d'alimentation en énergie électrique sans contact (1) selon la revendication 4,
dans lequel les valeurs caractéristiques de la bobine d'alimentation en énergie électrique (44), de la bobine de réception d'alimentation en énergie électrique (45), du condensateur d'alimentation en énergie électrique (43) et du condensateur de réception d'alimentation en énergie électrique (46) et la fréquence de la tension alternative (Va) sont réglées de telle sorte que la différence de phase (6) devient nulle lorsque la bobine d'alimentation en énergie électrique (44) et la bobine de réception d'énergie électrique (45) se font face et que la charge électrique (L) est à son maximum, et
dans lequel la section de détermination (6) exécute une commande telle que la tension alternative (Va) diminue progressivement à mesure que la différence de phase (9) augmente au-dessus de zéro ou d'un seuil de phase d'avance (Φ_{P}) présentant une valeur positive prédéterminée.

6. Dispositif d'alimentation en énergie électrique sans contact (1) selon l'une quelconque des revendications 1 à 5,
dans lequel la section de détermination (6) estime une quantité de déplacement relatif de la section de réception d'énergie électrique (3) par rapport à la section d'alimentation en énergie électrique (2) sur la base de la différence de phase (9).

7. Dispositif d'alimentation en énergie électrique sans contact (1) selon l'une quelconque des revendications 1 à 6,
dans lequel la section de réception d'énergie électrique (3) est installée dans un corps mobile (7) se déplaçant sur une piste (71, 72) et les multiples sections d'alimentation en énergie électrique (2) sont installées le long de la piste (71, 72), et
dans lequel l'élément de réception d'énergie électrique (45) disposé dans la section de réception d'énergie électrique (3) fait face à l'élément d'alimentation en énergie électrique (44) disposé dans la ou les sections d'alimentation en énergie électrique (2) et reçoit le courant alternatif.
